# EUROPÄISCHE PATENTSCHRIFT

(11) **EP 4 141 607 B1**
(45) Veröffentlichungstag und Bekanntmachung des Hinweises auf die Patenterteilung: **30.07.2025**
(21) Anmeldenummer: 22186627.0
(22) Anmeldetag: 25.07.2022
(51) Int. Cl.: G05D 1/00

(54) **MÄHROBOTER UND MÄHROBOTERSYSTEM**
ROBOTIC MOWER AND ROBOTIC MOWER SYSTEM
ROBOT DE TONTE ET SYSTÈME DE TONTE ROBOTISÉ

(30) Priorität: 25.08.2021 DE 102021121987
(43) Veröffentlichungstag der Anmeldung: 01.03.2023
(73) Patentinhaber: AL-KO Geräte GmbH, 89359 Kötz (DE)
(72) Erfinder: Volk, Martin, 89291 Holzheim (DE); Echerer, Thomas, 89335 Ichenhausen (DE); Kranemann, Christian, 89073 Ulm (DE)
(74) Vertreter: Dr. Binder & Binder GbR

(56) Entgegenhaltungen:
- EP-A1- 3 575 912
- EP-B1- 3 160 319
- US-A1- 2016 377 688

## Beschreibung

Die Erfindung betrifft ein System bestehend aus einem Mähroboter und einer Basisstation, wobei der Mähroboter ein Mähwerk, ein steuerbares Fahrwerk mit einer Steuervorrichtung, einen Motor zum Antrieb des Mäh- und Fahrwerkes und eine Empfangs- und Sendeeinrichtung für Funksignale, zur Erzeugung einer Funkverbindung zwischen dem Mähroboter und einer dem Mähroboter zugeordneten ortsfesten Basisstation des Mährobotersystems aufweist. Des Weiteren betrifft die Erfindung auch ein Verfahren zum Betrieb eines Mähroboters oder Mährobotersystems.

Mähroboter beziehungsweise Mährobotersysteme sind allgemein bekannt. Zur Steuerung der Mähroboter unterscheidet man einerseits Systeme, bei denen der Mähroboter eine von einem Schleifendraht umschlossene Fläche im Wesentlichen nach einem Zufallsprinzip bearbeitet, wobei in der Regel vorhandene Hindernisse erfasst und umgangen werden. Andererseits sind Systeme bekannt, bei denen die Position des Mähroboters durch unterschiedliche Techniken, wie zum Beispiel Kreuzfunkpeilungen oder Satellitennavigationssysteme, ermittelt wird und unter Kenntnis der Position des Mähroboters in der zu mähenden Fläche eine mehr oder weniger gezielte Abarbeitung vorgegebener Wege und/oder Teilflächen ausgeführt wird.

Der Nachteil der zufallsgestützten Methode liegt darin, dass aufgrund der nur zufälligen Bewegung des Mähroboters manche Stellen der zu mähenden Fläche überproportional oft und andere zu selten bearbeitet werden. Außerdem findet das Anfahren der Basisstation in der Regel entlang des Schleifendrahtes auf dem gleichen Weg statt. Insgesamt fehlt es solchen Systemen an Effizienz.

Aus der Druckschrift EP 3 160 319 B1 ist ein autonomer Rasenmäher beziehungsweise Mähroboter bekannt, welcher ein Mähwerk, ein steuerbares Fahrwerk mit einer Steuervorrichtung, einen Motor zum Antrieb des Mäh- und Fahrwerkes und eine Empfangs- und Sendeeinrichtung für Funksignale, zur Erzeugung einer Funkverbindung zwischen dem Mähroboter und einer dem Mähroboter zugeordneten ortsfesten Basisstation des Mährobotersystems aufweist. Außerdem kann dieser Mähroboter über ein Ultraschall-System oder ein UWB-Funksystem (= ultra wide Band - Funksystem) verfügen, womit unter Verwendung einer auf Entfernungsmessungen basierenden Triangulationstechnik Positionsbestimmungen durchgeführt werden. Zusätzlich ist an diesem Mähroboter auch eine Richtungserfassungseinheit vorhanden, die konkret als elektronischer oder mechanischer Kompass oder ein GPS-basiertes Gerät offenbart wird.

Weiterhin wird auf die im Prüfungsverfahren ermittelte Druckschrift EP 3 575 912 A1 verwiesen, in welcher ein Mähroboter offenbart wird, welcher eine Sensorvorrichtung zur Erfassung der Umgebung und eine Steuer- und/oder Regelungseinrichtung zur Positionsbestimmung in seinem Arbeitsbereich und zur Steuerung aufweist. Außerdem verfügt dieser Mähroboter über eine Kommunikationsverbindung zwischen der Steuer- und/oder Regelungseinrichtung und einem Nutzer. Diese Kommunikationsverbindung kann in der Art einer direkten drahtlosen Funkverbindung oder einer lokalen drahtlosen Netzwerkverbindung oder einer Internetverbindung gebildet sein. Die Sensoreinrichtung, die sowohl für die Erfassung der Umgebung des Mähroboters zur Darstellung einer 3-D-Darstellung des Arbeitsbereiches als auch zur Positionsbestimmung des Mähroboters genutzt wird, kann dabei aus einer oder mehreren Kameras und/oder einer oder mehreren Infrarotkameras und/oder aus einem oder mehreren spektrometrischen Sensoren und/oder aus einem oder mehreren Radar-oder Lidar-Sensoren und/oder aus einem oder mehreren Beschleunigungs- oder Drehratensensoren und/oder aus einem oder mehreren Sensoren zum Empfang von Signalen eines Satelliten-gestützten Navigationssystems und/oder aus einem oder mehreren geomagnetischen oder gravimetrischen Sensoren gebildet sein.

Weiterhin wird auf die im Prüfungsverfahren ermittelte Druckschrift US 2016 / 0377688 A1 verwiesen, welche einen mobilen Roboter mit einem Körper beschreibt, der sich mit Hilfe Magnetsensoren in künstlich erzeugten Magnetfeldern orientiert, wobei der Körper über eine Oberfläche innerhalb einer Umgebung bewegbar ist, eine Kalibrierungsspule, die an dem Körper getragen wird, aufweist und dazu konfiguriert ist, ein Kalibrierungsmagnetfeld zu erzeugen, eine Sensorschaltung, die an dem Körper getragen wird und auf das Kalibrierungsmagnetfeld anspricht, und eine daran getragene Steuerung dem Körper und in Kommunikation mit der Sensorschaltung. Die Sensorschaltung ist dazu konfiguriert, Kalibrierungssignale basierend auf dem Kalibrierungsmagnetfeld zu erzeugen. Die Steuerung ist dazu konfiguriert, die Sensorschaltung als eine Funktion der Kalibrierungssignale zu kalibrieren, was zu einer kalibrierten Sensorschaltung führt, die dazu konfiguriert ist, ein Sendermagnetfeld innerhalb der Umgebung zu detektieren und Detektionssignale basierend auf dem Sendermagnetfeld zu erzeugen. Die Steuerung ist konfiguriert, um eine Ausrichtung (engl. pose) des mobilen Roboters als eine Funktion der Detektionssignale zu schätzen.

Der Nachteil dieser bekannten positionsbasierten Systeme liegt im Wesentlichen darin, dass entweder die notwendige Infrastruktur, wie beispielsweise mehrere Beacon für die Triangulation, relativ aufwendig ist oder Satellitennavigationssysteme teuer und ohne zusätzliche Maßnahmen, wie beim differentielles GPS, zu ungenau sind. Auf Magnetfeldern basierende Systeme sind außerdem störanfällig bei sich verändernden Umgebungsbedingungen.

Es ist daher Aufgabe der Erfindung einen verbesserten Mähroboter beziehungsweise ein verbessertes Mährobotersystem zu entwickeln, welches einerseits kostengünstig ist und andererseits eine hohe Effizienz bei der Bearbeitung der zu mähenden Fläche aufweist.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben erkannt, dass eine optimierte und effiziente Steuerung eines Mähroboters voraussetzt, dass die zu bearbeitende Fläche und sowohl die Position als auch die Orientierung des Mähroboters in der zu bearbeitenden Fläche, also der zwei- oder dreidimensional definierte Ort an dem sich der Mähroboter aktuell auf der Fläche befindet und seine zwei- oder dreidimensionale Ausrichtung relativ zur Fläche, bekannt sein muss.

Weiterhin haben die Erfinder erkannt, dass es möglich ist auf kostengünstige Weise den Mähroboter derart auszustatten, dass mit Hilfe mindestens eines Antennenarrays und Anwendung zweier Richtungsbestimmungen und einer Entfernungsbestimmung die Position und Orientierung des Mähroboters relativ zu einer Basisstation ermittelt werden kann, so dass die bekannte Position und Orientierung des Mähroboters zur Führung der Mähroboters verwendet werden kann.

Bei der Richtungsbestimmung unter Verwendung eines Arrays mit mehreren Antennen wird der Phasenunterschied eines Funksignals einer bestimmten Frequenz betrachtet, den die Wellen des Funksignals zur gleichen Zeit an den räumlich getrennten Antennen des Arrays aufweisen und hieraus der Einfallswinkel des Funksignals berechnet. Dieses Verfahren wird allgemein als AoA-Methode (AoA = Angle of Arrival = Empfangswinkel) bezeichnet. Umgekehrt kann auch über eine Einzelantenne ein aus einem Array räumlich dislozierter Antennen kommendes Signal empfangen und das Signal bezüglich der darin vorliegenden Phasenverschiebungen in Bezug auf eine Frequenz analysiert werden, die je nach Abstrahlrichtung variiert und so die Abstrahlrichtung bestimmt werden. Dieses Verfahren wird allgemein als AoD-Methode (AoD = Angle of Departure = Sendewinkel) bezeichnet. Diese grundlegenden Verfahren einer Richtungsbestimmung auf der Basis von Phasenbeziehungen gesendeter und empfangener Signale einer bestimmten Frequenz zwischen zwei Stationen mit mindestens einem Antennenarray sind bekannt und werden beispielsweise in https://www.bluetooth.com/wpcontent/uploads/Files/developer/RDF_Technical_Overview.pdf eingehend beschrieben. Voraussetzung hierzu ist allerdings, dass die ausgetauschten Signale auf einer Frequenz und nicht auf einem weitem Frequenzband beruhen, wie sie beispielsweise bei sogenannten UWB-Systemen (UWB = ultra wide band) verwendet werden.

Hierdurch wird es möglich Wege und Positionen gezielt anzusteuern und vorgegebene Wege und Muster abzufahren beziehungsweise abzuarbeiten. Die Kenntnis der Orientierung des Mähroboters ist dabei deshalb wichtig, weil es nur durch diese Kenntnis möglich ist, mit einer vorgegebenen Richtung den Mähroboter losfahren zu lassen. Weiterhin ist es dann dem Mähroboter möglich die zu bearbeitende Fläche, die meist durch einen Schleifendraht begrenzt ist, empirisch zu ermitteln, auf einer Karte darzustellen und diese einem User des Mähroboters, zum Beispiel auf sein Smartphone, zu übertragen. Hierbei kann es sehr hilfreich sein, wenn zusätzlich auch ortsbezogene Parameter, die gegebenenfalls auch zuvor empirisch ermittelt wurden, mit an den User zu übertragen. Entsprechend kann der User dann vorgegebene Fahrmuster, abzufahrende Logos, oder sonstige ortsbezogene Parameter wie Mähhäufigkeit, verbotene Zonen, gezielte Fahrspuren zum Durchgang von Engstellen oder sonstige Vorgaben in die Karte einpflegen und an den Mähroboter, genauer an den mit ihm verbundenen Prozessor, der ihn steuert, zurück zu übermitteln.

Gemäß einem weiteren Aspekt der Erfindung, der allerdings auch andere Mähroboter betrifft, die positionsgesteuert betrieben werden, kann der Mähroboter auch mit einer Zusatzeinheit, zum Beispiel in Form eines Aufsatzes auf den Mähroboter oder selbst mit Rädern ausgestattet als Anhänger, ausgestattet werden. Diese Zusatzeinheit ist dann dazu ausgebildet, eine Nutzlast zu transportieren und falls gewünscht gezielt abzusetzen. Entsprechend kann eine funktionale Verbindung zwischen dem Mähroboter und der Zusatzeinheit, durch mechanische Kraftübertragungen und/oder elektrische Anschlüsse, hergestellt werden, so dass die Steuerung des Mähroboters auch die Zusatzeinheit steuern kann. Beispielsweise kann die Zusatzeinheit Düngemittel, Rasensamen oder Wasser als Nutzlast mit sich führen, welches gesteuert über den Mähroboter an vorgegebenen Positionen und Bereichen, gegebenenfalls auch entsprechend vorgegebener Parameter der Kartierung der zu bearbeitenden Fläche, dosiert durch eine entsprechende Austragsvorrichtung ausgebracht wird.

Demgemäß wird ein System bestehend aus einem Mähroboter und einer Basisstation vorgeschlagen, wobei der Mähroboter, aufweist:
- mindestens ein Mähwerk,
- ein steuerbares Fahrwerk mit einer Steuervorrichtung,
- mindestens einen Motor zum Antrieb des Mäh- und Fahrwerkes,
- eine Empfangs- und Sendeeinrichtung für Funksignale, zur Erzeugung einer Funkverbindung zwischen Mähroboter und einer dem Mähroboter zugeordneten ortsfesten Basisstation,- ein Mittel zur Bestimmung der Orientierung des Mähroboters im Sinne einer zwei- oder dreidimensionalen Ausrichtung,
- die Empfangs- und Sendeeinrichtung des Mähroboters eine Antenne zur Funkkommunikation aufweist,
- wobei die Basisstation eine Antenne zur Funkkommunikation aufweist,
- der Mähroboter und die Basisstation mit mindestens einem Prozessorsystem mit Programm- und Datenspeicher einschließlich Programmcode zur Verarbeitung von mähroboterbezogenen Daten und Signalen verbunden sind,
- mindestens eine der beiden Antennen zur Funkkommunikation der Basisstation und des Mähroboters als Antennenarray zur Detektion von Phasenunterschieden eingehender Funksignale einer bestimmten Frequenz ausgestaltet ist,
- wobei der Programmcode eines Prozessorsystems derart ausgestaltet ist, dass:
   -- mit Verwendung mindestens eines Antennenarrays,
   -- unter Anwendung zweier Richtungsbestimmungen
   -- und unter Anwendung einer Entfernungsbestimmung
   -- die Position und Orientierung des Mähroboters relativ zu einer Basisstation ermittelt wird,
   -- bei mindestens einer der zwei Richtungsbestimmungen die Phasenbeziehungen der ausgetauschten Funksignale zwischen einer Antenne zur Funkkommunikation und einem Antennenarray zur Detektion von Phasenunterschieden eingehender Funksignale einer bestimmten Frequenz ausgewertet werden,
   -- und bei der Entfernungsbestimmung die Intensität der empfangenen Funksignale ausgewertet wird,
   -- um die bekannte Position und Orientierung des Mähroboters zur Führung der Mähroboters zu verwenden.

In einer Ausführungsvariante wird vorgeschlagen den Mähroboter mit einer einfachen Antenne und einem Mittel zur Orientierungsbestimmung auszustatten, wobei dieser funktechnische Verbindung zu einer Basisstation mit einem Antennenarray besitzt.

Diese Ausführungsvariante betrifft somit einen Mähroboter, welcher bekanntermaßen
- mindestens ein Mähwerk,
- ein steuerbares Fahrwerk mit einer Steuervorrichtung,
- mindestens einen Motor zum Antrieb des Mäh- und Fahrwerkes,
- eine Empfangs- und Sendeeinrichtung für Funksignale, zur Erzeugung einer Funkverbindung zwischen Mähroboter und einer dem Mähroboter zugeordneten ortsfesten Basisstation,
aufweist.

Erfindungsgemäß zeichnet sich diese Ausführung dadurch aus, dass
- der Mähroboter ein Mittel zur Bestimmung der Orientierung aufweist,
- die Empfangs- und Sendeeinrichtung des Mähroboters eine einfache Antenne aufweist, über welche die Signale aus einem Antennenarray einer ortsfesten Basisstation empfangen werden,
- der Mähroboter und die Basisstation mit mindestens einem Prozessorsystem mit Programm- und Datenspeicher einschließlich Programmcode zur Verarbeitung von mähroboterbezogenen Daten und Signalen verbunden sind,
- wobei der Programmcode eines Prozessorsystems derart ausgestaltet ist, dass:
   -- aus den Phasenbeziehungen der zwischen der Antenne des Mähroboters und dem Antennenarray der Basisstation ausgetauschten Funksignale die Richtung des Mähroboters relativ zur Basisstation bestimmt wird,
   -- aus der Intensität der empfangenen Funksignale, also aus dem Signalpegel beziehungsweise der Signalamplitude, der Abstand zwischen Basisstation und Mähroboter bestimmt wird,
   -- so dass insgesamt die relative Position des Mähroboters zur Basisstation und dessen zwei- und/oder dreidimensionale Orientierung des Mähroboters bekannt ist,
   - und die ermittelte Position und Orientierung des Mähroboters zur Führung des Mähroboters verwendet wird.

Beispielsweise kann dabei die Orientierung des Mähroboters unmittelbar durch Auslesen eines Richtungssensors erfolgen. Demnach ist das Mittel zur Bestimmung der Orientierung des Mähroboters allgemein ein Magnetfeldsensor, insbesondere ein Fluxgatesensor, der sich besonders gut zur Bestimmung der Orientierung im Erdmagnetfeld eignet.

Eine andere Alternative zur Bestimmung der Orientierung des Mähroboters besteht darin durch eine vorgegebene Bewegung des Mähroboters und Ermittlung des Bewegungsvektors auf die Ausrichtung des Mähroboters zu schließen. Entsprechend wird auch vorgeschlagen, dass das Mittel zur Bestimmung der Orientierung des Mähroboters ein im Prozessorsystem vorliegendes Programm ist, welches dazu ausgebildet ist aufgrund der Bewegung des Mähroboters und damit verbundener Positionsbestimmungen die Orientierung des Mähroboters zu bestimmen.

Eine andere erfindungsgemäße Ausführung des Mähroboters sieht vor, den Mähroboter selbst mit einem Richtungssensor und einem Antennenarray auszustatten, wobei für die Basisstation lediglich eine einfache Antenne zur Funkkommunikation vorgesehen ist. Hierbei wird über den Richtungssensor die Orientierung des Mähroboters bestimmt und funktechnisch mit dem Antennenarray die Richtung und Entfernung bestimmt, in der die Basisstation gelegen ist. Da die Basisstation ortsfest mit bekannter Position ist, ergibt sich hieraus auch die Position des Mähroboters.

Demgemäß schlagen die Erfinder vor, einen Mähroboter, aufweisend:
- mindestens ein Mähwerk,
- ein steuerbares Fahrwerk mit einer Steuervorrichtung,
- mindestens einen Motor zum Antrieb des Mäh- und Fahrwerkes,
- eine Empfangs- und Sendeeinrichtung für Funksignale, zur Erzeugung einer Funkverbindung zwischen Mähroboter und einer dem Mähroboter zugeordneten ortsfesten Basisstation,
dahingehend zu modifizieren, dass
- der Mähroboter einen Richtungssensor zur Bestimmung der Orientierung, vorzugsweise einen Magnetfeldsensor, vorzugsweise einen Fluxgatesensor, aufweist,
- die Empfangs- und Sendeeinrichtung des Mähroboters ein Antennenarray aufweist, welches über Funksignale mit der Basisstation kommuniziert,
- die Basisstation eine einfache Antenne aufweist,
- der Mähroboter und die Basisstation mit mindestens einem Prozessorsystem mit Programm- und Datenspeicher einschließlich Programmcode zur Verarbeitung von mähroboterbezogenen Daten und Signalen verbunden sind,
- wobei der Programmcode eines Prozessorsystems derart ausgestaltet ist, dass:
   -- aus den Magnetfeldsensordaten die Orientierung des Mähroboters zum vorherrschenden Magnetfeld bestimmt wird,
   -- aus den im Antennenarray der Basisstation empfangenen Funksignalen und deren Phasenbeziehungen die Ausrichtung des Mähroboters zur Basisstation bestimmt wird,
   -- aus der Intensität des empfangenen Funksignals der Abstand zwischen Basisstation und Mähroboter bestimmt wird,
   -- woraus insgesamt die Position und zwei- und/oder dreidimensionale Orientierung des Mähroboters bestimmt wird,
   - und die ermittelte Position und Orientierung des Mähroboters zur Führung des Mähroboters verwendet wird.

Eine weitere erfindungsgemäße Ausführung des Mähroboters sieht vor, dass sowohl der Mähroboter als auch die Basisstation mit einem Antennenarray ausgestattet werden. Hierdurch ist es möglich neben der Entfernungsbestimmung zwischen Mähroboter und Basisstation auch die Ausrichtung sowohl die Mähroboters zur Basisstation als auch der Basisstation zum Mähroboter zu bestimmen. Somit lassen sich aus diesen Daten die Position und die Orientierung des Mähroboters relativ zur ortsfesten Basisstation ermitteln.

Es wird also in einer weiteren Ausführungsform ein Mähroboter vorgeschlagen, aufweisend:
- mindestens ein Mähwerk,
- ein steuerbares Fahrwerk mit einer Steuervorrichtung,
- mindestens einen Motor zum Antrieb des Mäh- und Fahrwerkes,
- eine Empfangs- und Sendeeinrichtung für Funksignale, zur Erzeugung einer Funkverbindung zwischen Mähroboter und einer dem Mähroboter zugeordneten ortsfesten Basisstation, wobei dieser erfindungsgemäß derart modifiziert ist, dass:
- der Mähroboter zur Bestimmung seiner Orientierung relativ zu einer Basisstation ein Antennenarray aufweist,
- dem Mähroboter eine ortsfeste Basisstation zugeordnet ist, welche zur Bestimmung der Richtung des Mähroboters relativ zur Basisstation ein Antennenarray aufweist,
- der Mähroboter und die Basisstation mit mindestens einem Prozessorsystem mit Programm- und Datenspeicher einschließlich Programmcode zur Verarbeitung von mähroboterbezogenen Daten und Signalen verbunden ist,
-wobei der Programmcode des mindestens einen Prozessorsystems derart ausgestaltet ist, dass:
   -- aus den im Antennenarray der Basisstation empfangenen Funksignalen des Mähroboters und deren Phasenbeziehungen die Richtung des Mähroboters relativ zur Basisstation bestimmt wird,
   -- aus den im Antennenarray des Mähroboters empfangenen Funksignalen der Basisstation und deren Phasenbeziehungen die Orientierung des Mähroboters bestimmt wird,
   -- und aus der Intensität der empfangenen Funksignale (Signalpegel, Signalamplitude) die Entfernung zwischen Basisstation und Mähroboter bestimmt wird,
   -- woraus die Position und zwei- und/oder dreidimensionale Orientierung des Mähroboters bestimmt wird,
   - und die ermittelte Position und Orientierung des Mähroboters zur Führung des Mähroboters verwendet wird.

Obwohl in den oben beschriebenen Ausführungsformen die Richtungsbestimmung mit Hilfe eines Antennenarrays grundsätzlich mit jeder Funkfrequenz möglich ist, ist es jedoch besonders vorteilhaft, wenn die Funkverbindung zwischen dem Mähroboter und der Basisstation als Bluetooth-Verbindung ausgestaltet wird. Hierbei können insbesondere auch die Prinzipien des Bluetooth-Standards 5.1 verwendet werden, obwohl diese bestimmungsgemäß für die Indoor-Nutzung bestimmt sind. Im Rahmen der Erfindung liegt es auch, die diesem Bluetooth-Standard zugrundeliegenden Prinzipien und Verfahren zur Positions- und Lagebestimmung durch Funkverbindungen unter Verwendung von Antennenarrays auf andere Frequenzen zu übertragen, insbesondere auf solche Frequenzen, die für eine bessere Reichweite bekannt sind.

Vorteilhaft ist es auch, wenn der Mähroboter über die Basisstation eine Datenverbindung zum Internet, insbesondere zu einer Internet-Cloud, insbesondere zu einer Cloud des Herstellers oder Vertreibers, aufweist. Hierdurch ist es möglich, im Bedarfsfalle Rechen- und Speicherleistung durch in der Cloud vorhandene leistungsfähige Rechner und Massenspeicher zur Verfügung zu stellen.

Beispielsweise kann das mindestens eine Prozessorsystem zur Positions- und Lagebestimmung im Mähroboter angeordnet werden.

Vorteilhaft kann das mindestens eine Prozessorsystem zur Positions- und Lagebestimmung in der Basisstation angeordnet sein, wobei die Funkverbindung zwischen Mähroboter und Basisstation dazu ausgebildet ist, die zur Positions- und Lagebestimmung notwendigen Informationen an die Basisstation zu übermitteln. Da die Basisstation meist unmittelbar an einer Netzstromversorgung angeschlossen ist, entstehen hierdurch weniger Leistungsprobleme und das Prozessorsystem muss nicht so energiesparend ausgelegt sein.

Schließlich kann jedoch auch das mindestens eine Prozessorsystem zur Positions- und Lagebestimmung in der Internet-Cloud, vorzugsweise auf einem unter Kontrolle des Herstellers oder Vertreibers stehenden Rechner, angeordnet sein, wobei die Funkverbindung zwischen Mähroboter und Basisstation dazu ausgebildet ist, die zur Positions- und Lagebestimmung notwendigen Informationen an die Basisstation zu übermitteln und die Basisstation dazu ausgebildet ist, die empfangenen Informationen zur Positions- und Lagebestimmung an die Cloud weiterzuleiten.

Weiterhin kann der Mähroboter und das Prozessorsystem zur Positions- und Lagebestimmung außerhalb des Mähroboters dazu ausgestattet sein, die ermittelten Positionen und Lagen des Mähroboters über die Funkverbindung zwischen Basisstation und Mähroboter zum Mähroboter zu übermitteln.

Erwähnt werden sollte in diesem Zusammenhang der Datenübertragungen zwischen Rasenmäher und Basisstation über Bluetooth einerseits und Basisstation und einem Accesspoint zum Internet noch, dass es vorteilhaft ist, die letztere Verbindung entweder über eine 5GHz-WLAN-Verbindung oder noch besser über eine leitungsgebundene Powerline-Verbindung herzustellen. Damit wird das Problem umgangen, dass sowohl die Bluetoothfrequenzen als auch die meistgebrauchten WLAN-Frequenzen um 2,4 GHz angesiedelt sind. Insbesondere durch die leitungsgebundene Powerline-Verbindung (Ethernet über 220V-Stromversorgungsleitung) wird jegliche Störung jeglicher Frequenz der Funkverbindung zwischen Basisstation und Rasenmäher vermieden.

Gemäß einer weiteren vorteilhaften Ausgestaltung wird auch vorgeschlagen, mindestens ein mit dem Mähroboter verbundenes Prozessorsystem dazu auszubilden, auf der Basis einer Vielzahl zuvor ermittelter Positionsinformationen des Mähroboters eine Karte einer zu bearbeitenden Fläche zu erstellen und zu speichern. Zur Erstellung dieser Karte kann beispielsweise der Rasenmäher gezielt an einer Randbegrenzung, zum Beispiel einem Schleifendraht oder einer mechanischen Begrenzung, oder auch manuell geführt an der zu mähenden Fläche entlangfahren, während ständig seine Positionsdaten ermittelt und in einer Kartierung abgelegt werden. Sind die äußeren Grenzen bekannt, kann dann zusätzlich der innere Bereich mit vorgegebenen Suchpattern oder auch nach Zufallsprinzip nach Hindernissen abgetastet werden und entsprechend kartographiert werden. Liegen zumindest die Außengrenzen vor, kann durch entsprechende Software die zu mähende Fläche mit einem Arbeitsmuster beziehungsweise Wegemuster überlagert werden, auf dem sich der Mähroboter von da an gezielt bewegen kann.

Vorteilhaft ist es dabei weiterhin, wenn die erstellte Karte der zu bearbeitenden Fläche ortsabhängige Parameter aufweist, welche mindestens einen ortsabhängigen Zustandswert der Fläche definieren. Insbesondere können Daten bezüglich Wuchs, Anzahl der Übermähungen, Schräge, Düngung, Rasensamen, Feuchte, aus direkter Messung, aus Rückschluss über Motor- und Leistungsdaten oder Steuerungsdaten oder aus Mähwiderstandsdaten gesammelt werden, so dass im Laufe der Zeit ein Zustandsbild der zu bearbeitenden Fläche entsteht. Auf der Basis solcher Parameter kann dann auch eine zusätzliche Optimierung des Mähprozesses, insbesondere bezüglich dessen ortsbezogener Häufigkeit, erfolgen.

Entsprechend ist es auch besonders günstig, wenn ein mit dem Mähroboter verbundenes Prozessorsystem dazu ausgebildet ist, auf der Basis von zuvor ermittelten Karten automatisch ein optimiertes Fahrmuster für die zu bearbeitende Fläche zu erstellen und in einem Speicher, vorzugsweise im Mähroboter, abzulegen, welches dem Mähroboter zur Verfügung steht, um es bei Bedarf abzuarbeiten.

Eine weitere günstige Ausgestaltung besteht darin, dass ein mit dem Mähroboter verbundenes Prozessorsystem dazu ausgebildet ist, auf der Basis von zuvor ermittelten Karten der zu bearbeitenden Fläche Engstellen, z.B. Grenzen mit Abständen kleiner als Vorgabe zur nächsten Grenze, oder enge Durchgänge, also Engstellen über längeren Abschnitt, zu ermitteln und automatisch einen optimierten Weg zur Durchfahrt und Bearbeitung der Engstellen und Durchgänge zu bestimmen und dem Mähroboter zur Verfügung zu stellen.

Weiterhin kann ein mit dem Mähroboter verbundenes Prozessorsystem auch dazu ausgebildet sein, ein vorgegebenes Muster oder eine vorgegebene Abbildung eines Logos in das Fahrmuster als Teilmuster zu integrieren.

Vorteilhaft ist es auch, wenn ein mit dem Mähroboter verbundenes Prozessorsystem dazu ausgebildet ist, durch ständigen Abgleich zwischen zu steuerndem Weg und tatsächlich gefahrenem Weg vorkommende Abweichungen, wie Abdriften und Schlupf, zu korrigieren.

Liegen bereits entsprechende ortsbezogene Parametereintragungen in der Kartierung der zu bearbeitenden Fläche vor, so kann die entsprechende Korrektur bereits vorausschauend vorgenommen werden, sodass der dann gefahrene Weg des Mähroboters insgesamt gezielter und mit weniger nachträglichen Korrekturen verläuft. Entsprechend wird auch vorgeschlagen, dass ein mit dem Mähroboter verbundenes Prozessorsystem dazu ausgebildet ist, ortsabhängige Korrekturwerte abzuspeichern und beim nochmaligen Anfahren bekannter Positionen diese Korrekturwerte vorausschauend in die Steuerung zu übernehmen.

Eine weitere vorteilhafte Ausgestaltung des Mähroboters sieht vor, dass die Steuervorrichtung des Mähroboters Programmcode aufweist, welcher aufgrund einer vorliegenden Karte der zu bearbeitenden Fläche vorausschauend Hindernisse asymptotisch umfährt und/oder Begrenzungen asymptotisch anfährt. Es werden dabei also Grenzen oder Hindernisse nicht mehr stumpf angefahren, sondern vom Mähroboter aufgrund der Kenntnis eines Hindernisses oder einer Grenze vorausschauend in flachem Winkel angefahren, wodurch insgesamt die Arbeitsweise des Mähroboters fließender und effizienter wird.

Weiterhin kann vorteilhaft ein mit dem Mähroboter verbundenes Prozessorsystem auch dazu ausgebildet werden, temporär Hindernisse in die Karte der zu bearbeitenden Fläche einzutragen, wobei nach einer vorgegebenen Zeit diese Hindernisse wieder gelöscht werden.

Günstig ist es, wenn der Mähroboter mit mindestens einem Sensor zur Detektion einer Flächenbegrenzung, insbesondere zur Detektion eines als Flächenbegrenzung eingesetzten Schleifdrahtes, ausgestattet ist und ein mit dem Mähroboter verbundenes Prozessorsystem dazu ausgebildet ist, die Lage dieser Flächenbegrenzung, insbesondere des Schleifdrahtes, als äußerste zu befahrende Grenze einer zu bearbeitenden Fläche zu interpretieren.

Weiterhin ist es vorteilhaft, wenn ein mit dem Mähroboter verbundenes Prozessorsystem dazu ausgebildet ist, eine gespeicherte Karte einer zu bearbeitenden Fläche mit einem Nutzer zu kommunizieren, also die gespeicherte Karte an einen Nutzer zu übermitteln und/oder eine solche Karte vom Nutzer zu empfangen, wobei die Karte durch entsprechende Modifikation in veränderter Form oder mit ergänzten Daten zurück übertragen wird.

Vorteilhaft kann die zwischen Prozessorsystem und Nutzer kommunizierte Karte zumindest weitere ortsbezogene Information zur zu bearbeitenden Fläche aus mindestens einer Art der folgenden Liste aufweisen:
- geplanter Weg des Mähroboters;
- Hindernisse;
- Abdriftparameter;
- Schlupfparameter;
- Position, Größe und Orientierung eines zu fahrenden Musters / Logos;
- Wuchsgeschwindigkeit;
- Mähwiderstand;
- Düngelast;
- Bodenfeuchte;
- durchgeführte Mähungen;
- gefundene besondere Mähereignisse, z.B. Leistungsspikes, Festfahren, Auftreten von Fehlerereignissen;
wobei alle Daten der vorgenannten Liste optional auch mit einem Zeitstempel und/oder einer Ablaufdauer und/oder einem Ablaufdatum versehen werden können.

Gemäß einem weiteren Aspekt der Erfindung, der auch allgemein mit einem Mähroboter gemäß dem Oberbegriff des Anspruches 1 oder einem der oben beschriebenen Ausführungen anwendbar ist, wird vorgeschlagen, dass der Mähroboter durch eine zusätzliche auf den Mähroboter aufgesetzte oder an den Mähroboter angehängte fahrende Zusatzeinheit, also durch einen Aufsatz oder einen Anhänger, ergänzt wird, welche dazu ausgebildet ist, eine Nutzlast zu transportieren und von einem Prozessorsystem gesteuert ganz oder teilweise oder dosiert an vorgegebenen oder berechneten Positionen oder Flächen abzusetzen.

Besonders vorteilhaft ist es dabei, wenn die Zusatzeinheit nicht nur zum Transport von Nutzlasten, sondern auch zu deren gesteuertem Ausbringen ausgestaltet ist. Entsprechend wird vorgeschlagen, dass die zusätzliche Einheit eine Datenverbindung, vorzugsweise eine Bluetooth-Datenverbindung oder eine NFC-Verbindung zum Mähroboter aufweist, die dazu ausgebildet ist, die Zusatzeinheit in ihrer Funktion zu steuern. Vornehmlich, jedoch nicht ausschließlich, betrifft dies ein positionsabhängiges und gegebenenfalls auch dosiertes ausbringen der Nutzlast, wobei auch ein automatisch gesteuertes Auf- und/oder Abladen, zum Beispiel an der Basisstation oder einer hierfür gesondert eingerichteten Ladestation zum Rahmen der Erfindung zählt.

Grundsätzlich besteht die Möglichkeit eine solche Zusatzeinheit mechanisch mit einem bereits im Mähroboter vorliegenden Antrieb zu koppeln, allerdings erscheint es variabler, wenn die Zusatzeinheit mit einem eigenen Antrieb ausgestattet ist.

Dabei kann die Zusatzeinheit entweder mit einer eigenen Stromquelle ausgestattet werden, um den Akku des Mähroboters nicht zusätzlich zu belasten. Alternativ oder ergänzend kann es aber von Vorteil sein, die Zusatzeinheit mit mindestens einer elektrischen Strom- und/oder Datenverbindung zum Mähroboter auszustatten und damit auch die Steuerung der Funktionen der Zusatzeinheit über den Mähroboter auszuführen.

Außerdem kann ein Sensor am Mähroboter angeordnet sein, welcher eine Kopplung zwischen Mähroboter und Zusatzeinheit detektiert und ein Statussignal an ein verbundenes Prozessorsystem weiterleitet.

Beispielhaft kann als Nutzlast der Zusatzeinheit eine Art der folgenden Liste vorliegen:
- Düngemittel;
- Rasensamen;
- Wasser;
- Pflanzenschutzmittel;
- Markierungsmittel (Farbe);
wobei die Zusatzeinheit eine der Nutzlast angepasste Ausbringungsvorrichtung, zum Beispiel in Form einer Austragswalze, eines Rotationsverteilers oder einer Sprühvorrichtung, aufweist.

Im Rahmen der Erfindung wird außerdem ein Mährobotersystem vorgeschlagen, aufweisend:
- einen Mähroboter gemäß einem der voranstehenden Ansprüche,
- eine Basisstation, ausgestattet zum Senden und Empfangen von Funksignalen zwischen Mähroboter und Basisstation,
- die Basisstation mit einer Verbindung zum Internet, insbesondere zu einer Cloud, insbesondere zu einer Cloud eines Herstellers oder Vertreibers.

Ein solches Mährobotersystem kann erfindungsgemäß auch mit einem Datenendgerät oder einer Teilnehmerstation - zum Beispiel einem Smartphone, einem Tablet, einem Laptop oder einem PC - eines Users ergänzt werden, welche dazu ausgestattet mit dem Mähroboter über die Basisstation zu kommunizieren, um Daten des Mähroboters zu empfangen und umgekehrt zu diesem zu senden.

Weiterhin kann als Teil des Mährobotersystems auch das Datenendgerät durch enthaltenen Programmcode dazu ausgebildet sein, eine von einem Prozessorsystem des Mährobotersystems erzeugte Karte einer zu bearbeitenden Fläche anzuzeigen, gewünschte Fahrwege oder besondere Bereiche, wie nicht zu bearbeitende Flächen - zum Beispiel um bestimmte Blumenbereiche beim Mähen auszusparen oder besonders zu düngende oder mit Blumen- oder Grassamen zu beschickende Flächen -, einzuzeichnen und diese an das Prozessorsystem des Mährobotersystems zur entsprechenden Bearbeitung zu übertragen.

Schließlich schlagen die Erfinder auch ein Verfahren zum Betrieb eines Mähroboter oder Mährobotersystem vor, welches die folgenden Verfahrensschritte aufweist:
- Bestimmung der Orientierung des Mähroboters aus Bewegungsdaten oder mit einem am Mähroboter angeordneten Richtungssensor,
- Bestimmung der Richtung des Mähroboters relativ zu einer Basisstation aus den im Antennenarray des Mähroboters empfangenen Funksignalen der Basisstation und deren Phasenbeziehungen,

- Bestimmung des Abstandes zwischen Basisstation und Mähroboter aus der Intensität der empfangenen Funksignale,
- Bestimmung der Position und der zwei- und/oder dreidimensionalen Orientierung des Mähroboters aus der Orientierung, der Richtung und dem Abstand zur Basisstation,
- und die ermittelte Position und Orientierung des Mähroboters zur Führung des Mähroboters verwendet wird.

Ergänzend wird darauf verwiesen, dass der hier zur Anwendung kommende Rasenmäher mechanisch unterschiedlichste bekannte Ausführungsformen annehmen kann. Dies betrifft insbesondere das Mähsystem, welches aus einem oder mehreren einzeln oder getrennt angetriebenen Mähwerken bestehen kann. Weiterhin betrifft es die Anzahl der Motore, mit denen das Mähwerk und das Fahrwerk angetrieben werden, wobei hier sowohl ein gemeinsamer Motor mit Kraftverteilung als auch einzelne Motore für jedes rotierende Teil oder eine Kombination aus beidem enthalten sind. Außerdem betrifft es insbesondere auch das steuerbare Fahrwerk, welches beispielsweise durch ein Gelenkfahrwerk oder richtungssteuerbare Einzelräder oder Räderpaare verwirklicht wird. Insbesondere enthalten ist dabei auch eine Fahrwerksteuerung über individuell oder paarweise mit unterschiedlicher Geschwindigkeit und gegebenenfalls Richtung angetriebene Räder, ähnlich der Steuerung eines Kettenfahrwerks.

Zum Rahmen der Erfindung zählen weiterhin auch Ergänzungen des vorgehend beschriebenen Verfahrens aus sich dem Fachmann ohne weiteres erschließenden Verfahrensschritten aufgrund der Beschreibung des Mähroboters, des Mährobotersystems und dessen Funktionsweise, sowohl im vorhergehenden Text als auch in der nachfolgenden Figurenbeschreibung einschließlich der zeichnerischen Offenbarung der Figuren.

Im Folgenden wird die Erfindung anhand bevorzugter Ausführungsbeispiele mit Hilfe der Figuren näher beschrieben, wobei nur die zum Verständnis der Erfindung notwendigen Merkmale dargestellt sind. Es zeigen im Einzelnen:
- FIG 1:: Darstellung einer Positionsbestimmung eines Rasenmähers durch Antennenarray in einer Basisstation und Orientierungsbestimmung des Rasenmähers mit einem Richtungssensor;
- FIG 2:: Darstellung einer Positionsbestimmung eines Rasenmähers durch Antennenarray in einer Basisstation und Orientierungsbestimmung des Rasenmähers aufgrund der Bewegung des Rasenmähers;
- FIG 3:: Darstellung einer Positions- und Orientierungsbestimmung eines Rasenmähers mit einem Richtungssensor unter Verwendung eines Antennenarrays im Rasenmäher;
- FIG 4:: Darstellung einer Positions- und Orientierungsbestimmung eines Rasenmähers mit je einem Antennenarray im Rasenmäher und einer Basisstation;
- FIG 5:: Darstellung einer beispielhaften automatischen Auslegung eines Fahrmusters für einen Rasenmäher mit integrierter Positions- und Orientierungsbestimmung;
- FIG 6:: Darstellung einer beispielhaften Ausführung eines Mährobotersystems mit Verbindung zur einer Hersteller-Cloud mit dort installiertem Prozessorsystem über das Internet.

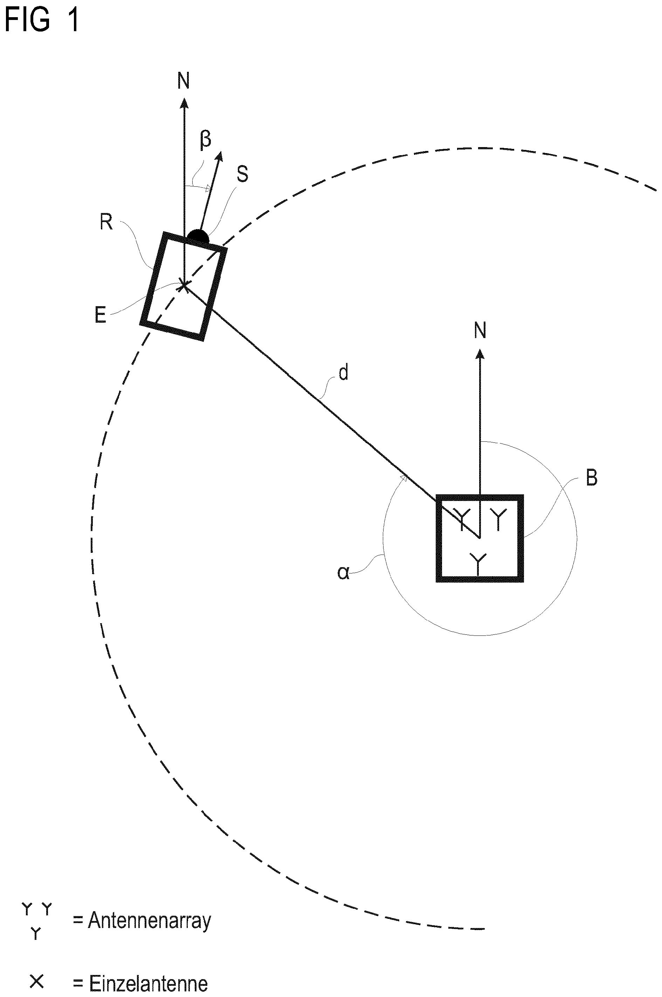

In den Figuren 1 bis 4 wird gezeigt, wie auf unterschiedliche Weise durch Richtungsbestimmungen ausgetauschter Signale zwischen einem Antennenarray und einer einfachen Antenne, Entfernungsmessungen über die gemessene Signalstärke der ausgetauschten Signale und einer weiteren Bestimmung der Ausrichtung eines Rasenmähers (Mähroboters) dessen Position und Orientierung auf einer zu bearbeitenden Fläche ermittelt werden kann.

Die Figur 1 zeigt eine erste Ausführungsform, bei der eine Basisstation B auf einer zu mähenden oder allgemein zu bearbeitenden Fläche ortsfest und nach Norden ausgerichtet positioniert ist. Die Ausrichtung kann dabei entweder durch eine tatsächliche physische Ausrichtung geschehen oder es kann auch durch einen entsprechenden Richtungssensor die vorhandene Ausrichtung der Basisstation festgestellt werden, so dass im Folgenden die Ausrichtung der Basisstation virtuell erfolgt. Die Basisstation selbst verfügt dabei über ein Antennenarray, durch welches die Richtung beziehungsweise der Winkel α aus der ein einfallendes Funksignal eines entfernt stehenden Senders, hier ein Rasenmäher, empfangen wird, bestimmt werden kann. Das zugrundeliegende Verfahren, bei dem aus den Phasenunterschieden des eingehenden Signals bei den einzelnen Antennen des Antennenarrays die relative Richtung des einfallenden Signals bestimmt wird, ist allgemein bekannt und wird beispielsweise bei dem Bluetooth-Standard 5.1 angewendet. Alternativ kann diese Richtung auch durch ein von den Antennen des Antennenarray ausgesendetes Signal und deren unterschiedliche Phasenverschiebung an der einfachen Empfangsantenne ausgewertet werden und auf diese Weise bestimmt werden.

Über die Signalstärke der kommunizierten Funksignale lässt sich außerdem die Entfernung d zwischen Rasenmäher und Basisstation bestimmen beziehungsweise mit guter Genauigkeit abschätzen. Aufgrund des bekannten Winkels α und der bekannten Entfernung d kann die Position des Rasenmähers R relativ zur Basisstation B bestimmt werden. Für eine zielgerichtete Steuerung des Rasenmähers ist allerdings auch die Orientierung des Rasenmähers wesentlich, da nur so eine direkte Ansteuerung vorgegebener Positionen und/oder vorgegebener Bereiche möglich ist. Es muss also die Richtung, in die der Rasenmäher fährt, sobald er sich vorwärts bewegt bekannt sein. Diese Information kann in dieser ersten Ausführungsform mit Hilfe eines Richtungssensors, beispielsweise eines Magnetsensors, insbesondere eines Fluxgatesensors, bestimmt werden. Damit ist dann nicht nur die Position des Rasenmähers, sondern auch seine Ausrichtung bekannt, so dass eine gezielte Steuerung möglich wird.

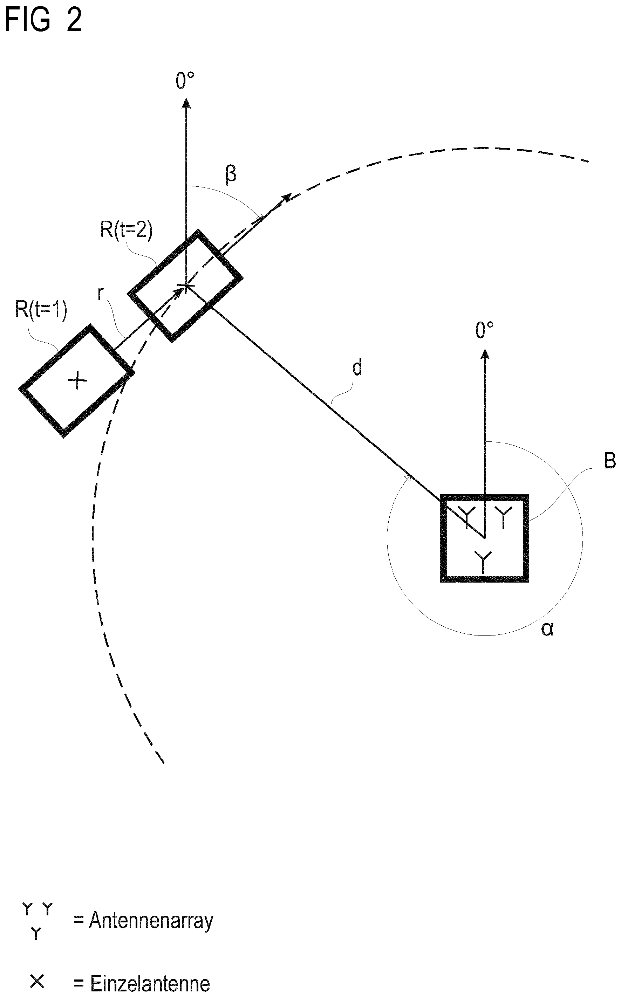

Eine weitere Ausführungsform ist in der Figur 2 dargestellt, die grundsätzlich der Figur 1 entspricht, allerdings hat der Rasenmäher keinen Richtungssensor und die Basisstation ist nicht zwingend nach Norden ausgerichtet beziehungsweise kann die Nordrichtung nicht bestimmen.

Über das Antennenarray kann wieder die relative Richtung beziehungsweise der Winkel α des Signals des Rasenmähers und über die Signalstärke die Entfernung d zwischen Rasenmäher und Basisstation und somit die relative Position des Rasenmähers zur Basisstation bestimmt werden. Weiterhin lässt sich die Orientierung des Rasenmähers relativ zur Basisstation ermitteln, indem der Rasenmäher bewegt wird und durch zwei- oder mehrfache Positionsbestimmung die Positionen zu unterschiedlichen Zeitpunkten R(t=1) und R(t=2) und damit der Bewegungsvektor r des Rasenmäher bestimmt werden. Ist der Rasenmäher in seiner Vorwärtsrichtung bewegt worden, so entspricht der Bewegungsvektor der Orientierung des Rasenmähers. Damit ist auch bei dieser Ausführung sowohl die Position als auch die Orientierung des Rasenmähers jeweils relativ zur Basisstation bekannt.

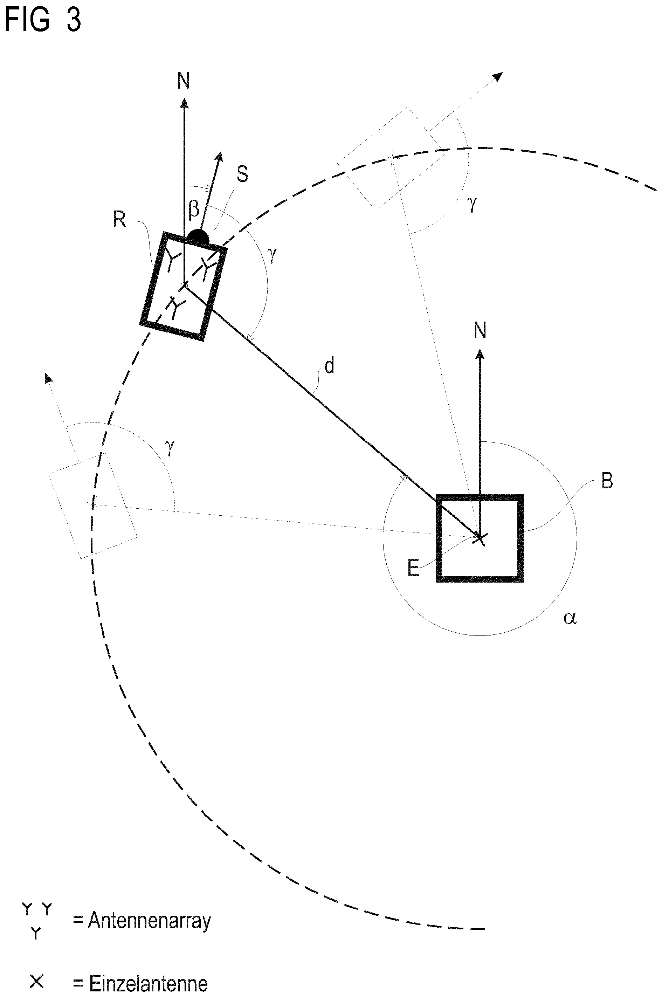

Eine andere Ausführungsform besteht darin, wie in der Figur 3 gezeigt, den Rasenmäher R mit einem Antennenarray und einem Richtungssensor auszustatten, währen die ortsfeste Basisstation lediglich eine einfache Antenne aufweist. Mit Hilfe des Antennenarrays lässt sich damit die Richtung beziehungsweise der Winkel γ von Rasenmäher zur Basisstation ermitteln. Aus der gemessenen Signalstärke kann die Entfernung zwischen Basisstation und Rasenmäher bestimmt werden. Allerdings ist hieraus noch keine Positionsbestimmung möglich, da es hierzu auf einem Kreis gleicher Entfernung um die Basisstation beliebig viele Positionen - beispielhaft gestrichelt dargestellt - gibt, an denen die vorgenannten Messungen zutreffen. Verfügt der Rasenmäher jedoch über einen Richtungssensor S, mit dem sich die Orientierung des Rasenmähers in Bezug auf Norden, also der Winkel β, bestimmen lässt und ist die Basisstation ebenfalls nach Norden ausgerichtet beziehungsweise deren Ausrichtung relativ zum Norden - oder einer sonstigen gemeinsamen Orientierung - bekannt, so wird die Position des Rasenmähers auf dem Entfernungskreis eindeutig. Position und Orientierung des Rasenmähers sind somit für eine gezielte Steuerung eindeutig definiert.

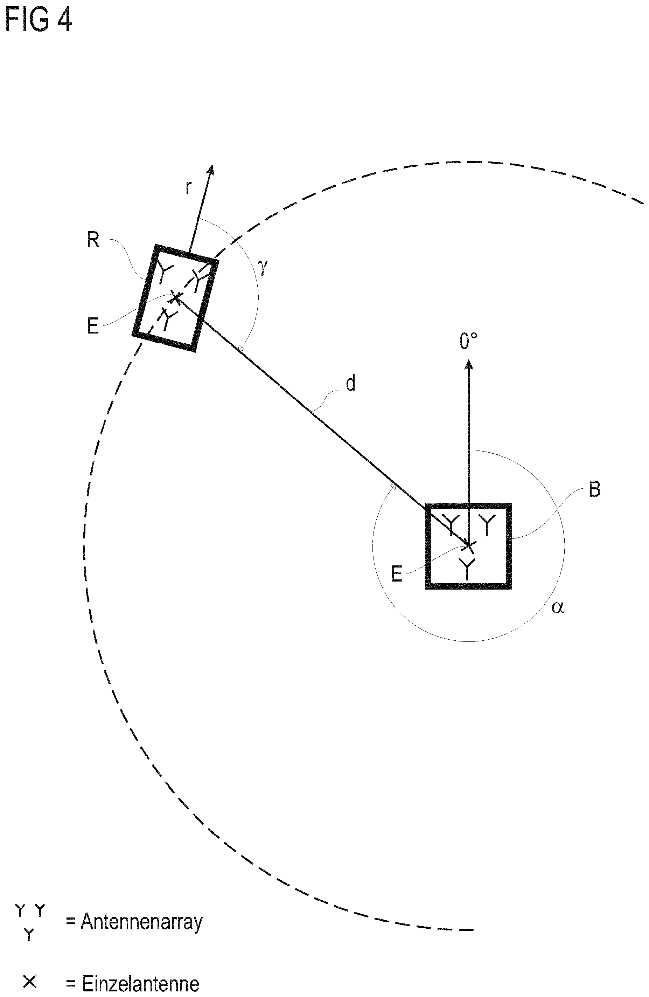

Eine weitere Ausführungsform des Rasenmähers und des Rasenmähersystems ist in der Figur 4 dargestellt. Hier verfügt sowohl der Rasenmäher R als auch die Basisstation B über ein Antennenarray und kann damit jeweils die eigene Ausrichtung auf die jeweilige Gegenstation, also die Winkel α und γ bestimmen. Zusätzlich kann auch hier über die Messung der Signalstärken der empfangenen Funksignale der jeweiligen Gegenstation die Entfernung zwischen den beiden Sendern und Empfängern, also zwischen Basisstation und Rasenmäher beziehungsweise zwischen Rasenmäher und Basisstation, ermittelt werden. Somit ist relativ zur Basisstation B die Position des Rasenmähers R und gleichzeitig die Orientierung des Rasenmähers R bekannt, ohne dass ein zusätzlicher Richtungssensor notwendig ist.

Es wird ergänzend darauf hingewiesen, dass die Genauigkeit und Dimension der Richtungsbestimmungen von eingehenden oder ausgesandten Signalen über ein Antennenarray grundsätzlich von der Anzahl und Anordnung der Antennen im Antennenarray abhängig ist. Entsprechend kann je nach Ausgestaltung des Antennenarrays die Orientierung des Antennenarrays zwei- oder dreidimensional relativ zum empfangenen Funksignal und damit auch die Lage des damit verbundenen Gerätes bestimmt werden.

Lassen sich Position und Orientierung oder Lage des Rasenmähers mit den zuvor beschriebenen Antennensystemen und gegebenenfalls vorhandenen Richtungssensoren feststellen, so kann nun der Rasenmäher eine zu bearbeitende Fläche zunächst erkunden, kartographieren und dann automatisch mit einer vorgegebenen Fahrweise oder einem vorgegebenen Fahrtstrecke, jeweils unter Beachtung vorliegender Hindernisse abarbeiten und falls notwendig auch gezielt bestimmte Positionen oder Teilflächen anfahren.

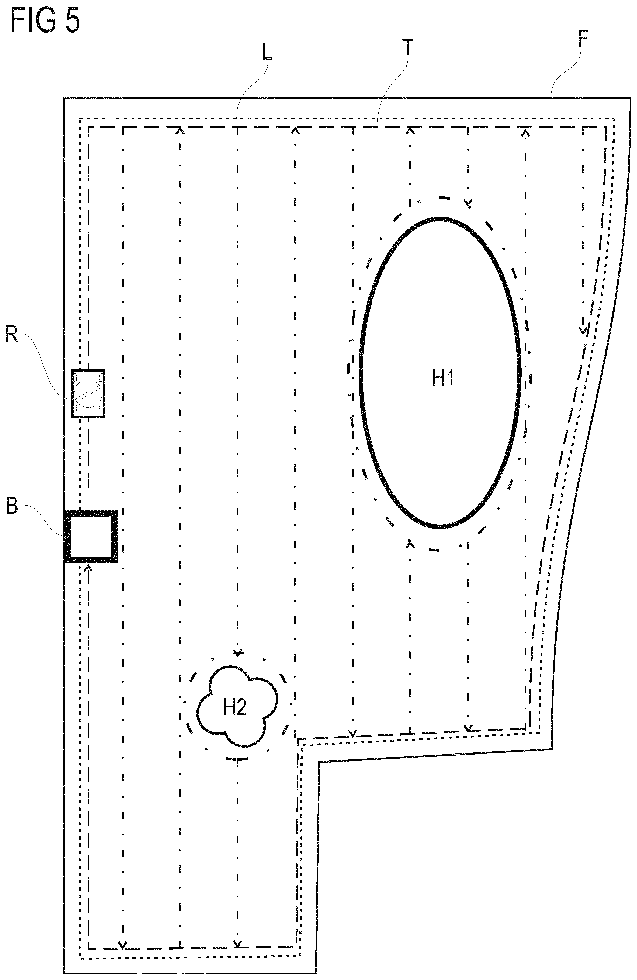

Um zunächst eine zu bearbeitende Fläche in ihren Außengrenzen festzulegen und zu speichern kann der Rasenmäher zunächst entlang dieser Außengrenze manuell geführt werden, wobei gleichzeitig die Positionen des Rasenmähers erfasst und entsprechend gespeichert werden. Alternativ kann auch ein Schleifendraht L verwendet werden, welcher an der Grenze der zu bearbeitenden Fläche F angeordnet wurde. Mit einem entsprechenden Sensor erkennt der Rasenmäher diesen Schleifendraht, fährt ihn ab und kartographiert so die Außengrenze der zu bearbeitenden Fläche F. In der Figur 5 ist eine solche Situation schematisch dargestellt. Ausgehend von der Basisstation B führt ein Schleifendraht an der Außengrenze der Fläche F entlang, so dass der Rasenmäher zunächst den gestrichelt gezeigten Fahrweg um die Fläche F herumfährt und damit die zu bearbeitende Fläche in einer elektronischen Karte einträgt.

Zur Abarbeitung eines vorgegebenen Fahrmusters, wie es beispielhaft strichpunktiert in der Figur 5 eingetragen ist, kann der Rasenmäher zunächst den Fahrweg von der Basisstation ausgehend entlang der Begrenzung der Fläche F beginnen, bis er auf einen ersten Schnittpunkt mit dem zu fahrenden Fahrmuster gelangt. Dort biegt der Rasenmäher auf das vorgegebene Fahrmuster ein und fährt bis zum nächsten Schnittpunkt. Dort sucht er den nächst gelegenen und noch nicht befahrenen Schnittpunkt zwischen Außengrenze und Fahrmuster, fährt entlang der Außengrenze zu diesem Schnittpunkt und dann entlang des Fahrmusters, bis die Fläche abgearbeitet ist. Treten in der zu bearbeitenden Fläche F Hindernisse H1 und H2 auf, so kann der Rasenmäher diese entweder nach Bedarf umfahren, wobei aufgrund des vorbekannten abzuarbeitenden Fahrmusters und der bekannten Orientierung des Rasenmähers das Hindernis automatisch gezielt abgetastet werden kann, um sich hinter dem Hindernis jeweils wieder auf den zunächst verlassenen Fahrweg des Fahrmusters wieder einzufädeln. Sind die Konturen der Hindernisse dann bekannt und kartographiert, können diese von da an auch gezielt umfahren werden.

Es wird darauf hingewiesen, dass im Rahmen der Erfindung die Erzeugung eines optimierten Fahrmusters auf der Basis der erkannten Außengrenzen und gegebenenfalls erkannter oder vorbestimmter Hindernisse und/oder nicht zu bearbeitender Flächen mit Hilfe einer softwarebasierten KI (=künstlichen Intelligenz) ausgeführt werden kann.

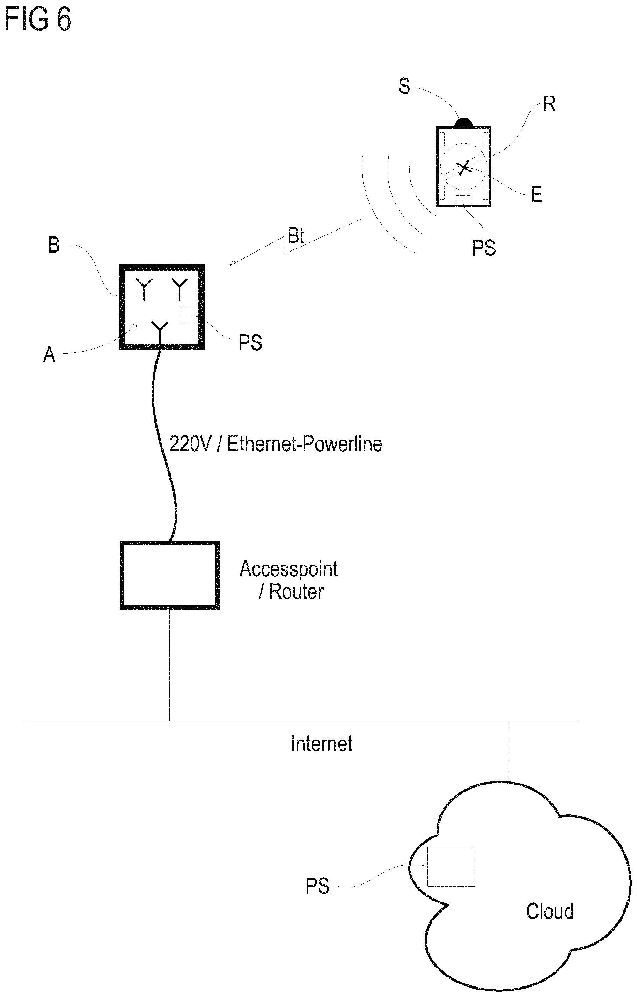

In der Figur 6 ist schematisch dargestellt, wie der erfindungsgemäße Rasenmäher R beziehungsweise das gesamte Rasenmähersystem untereinander und mit einer Herstellercloud im Internet verbunden ist. Hierbei wird bevorzugt eine Blutoothverbindung zwischen dem Rasenmäher und der Basisstation verwendet, wobei eine der Ausführungen der Figuren 1 bis 4 verwendet werden kann. Die Basisstation sollte bevorzugt über eine Ethernet-Powerline-Verbindung oder über eine 5GHz-WLAN-Verbindung mit einem Accesspoint oder einem Internet-Router Kontakt haben, so dass hierüber eine Datenverbindung zur Internet-Cloud des Herstellers erfolgen kann. Im Rahmen der Erfindung kann dabei das Prozessorsystem PS, welches die Positionsberechnungen für den Rasenmäher durchführt an jedem Ort, der durch diese Verbindung erreicht wird angeordnet sein, vornehmlich kann dies der Rasenmäher selbst, die Basisstation oder auch die Cloud des Herstellers oder Vertreibers sein. Bei einem nicht im Rasenmäher oder der Basisstation installierten Prozessorsystem müssen allerdings die Signaldaten entsprechend über die Datenverbindung an das externe Prozessorsystem weitergeleitet werden und entsprechend die ermittelten Positionsdaten umgehend an die Basisstation und/oder den Rasenmäher übermittelt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere beschränkt sich die Erfindung nicht auf die angegebenen Merkmalskombinationen, sondern es können auch für den Fachmann offensichtlich ausführbare andere Kombinationen und Teilkombinationen aus den offenbarten Merkmalen gebildet werden. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind. Ebenso liegt es auch im Rahmen der Erfindung, eine mechanische Umkehr der Funktionen der einzelnen mechanischen Elemente der Erfindung zu bewirken.

### Bezugszeichenliste

- A: Antennenarray
- B: Basisstation
- E: Einzelantenne
- d: Entfernung Basisstation zu Rasenmäher
- H1, H2: Hindernisse
- L: Schleifdraht
- N: Norden beziehungsweise Referenzrichtung der Basisstation
- R: Rasenmäher (Mähroboter)
- R(t=1): Rasenmäher zum Zeitpunkt t=1
- R(t=2): Rasenmäher zum Zeitpunkt t=1
- r: Bewegungsrichtung ~ Orientierung des Rasenmähers
- T: Fahrweg
- α: Winkel zwischen Norden und Peilung zum Rasenmäher
- β: Winkel zwischen Norden und Ausrichtung des Rasenmähers
- γ: Winkel zwischen der Ausrichtung des Rasenmähers und der Peilung von der Basisstation zum Rasenmäher

## Patentansprüche

1. System bestehend aus einem Mähroboter (R) und einer Basisstation (B), wobei der Mähroboter (R), aufweist:
1.1. mindestens ein Mähwerk,
1.2. ein steuerbares Fahrwerk mit einer Steuervorrichtung,
1.3. mindestens einen Motor zum Antrieb des Mäh- und Fahrwerkes,
1.4. eine Empfangs- und Sendeeinrichtung für Funksignale, zur Erzeugung einer Funkverbindung zwischen Mähroboter (R) und einer dem Mähroboter (R) zugeordneten ortsfesten Basisstation (B),
1.5. ein Mittel zur Bestimmung der Orientierung des Mähroboters (R) im Sinne einer zwei- oder dreidimensionalen Ausrichtung,
1.6. die Empfangs- und Sendeeinrichtung des Mähroboters (R) eine Antenne zur Funkkommunikation (A, E) aufweist,
1.7. wobei die Basisstation (B) eine Antenne zur Funkkommunikation (A, E) aufweist,
1.8. der Mähroboter (R) und die Basisstation (B) mit mindestens einem Prozessorsystem mit Programm- und Datenspeicher einschließlich Programmcode zur Verarbeitung von mähroboterbezogenen Daten und Signalen verbunden sind,
1.9. mindestens eine der beiden Antennen zur Funkkommunikation der Basisstation (B) und des Mähroboters (R) als Antennenarray (A) zur Detektion von Phasenunterschieden eingehender Funksignale einer bestimmten Frequenz ausgestaltet ist,
1.10. wobei der Programmcode eines Prozessorsystems derart ausgestaltet ist, dass:
- mit Verwendung mindestens eines Antennenarrays (A),
- unter Anwendung zweier Richtungsbestimmungen
- und unter Anwendung einer Entfernungsbestimmung
- die Position und Orientierung des Mähroboters (R) relativ zu einer Basisstation (B) ermittelt wird,
- bei mindestens einer der zwei Richtungsbestimmungen die Phasenbeziehungen der ausgetauschten Funksignale zwischen einer Antenne zur Funkkommunikation (E, A) und einem Antennenarray zur Detektion von Phasenunterschieden eingehender Funksignale einer bestimmten Frequenz (A) ausgewertet werden,
- und bei der Entfernungsbestimmung die Intensität der empfangenen Funksignale ausgewertet wird,
- um die bekannte Position und Orientierung des Mähroboters (R) zur Führung der Mähroboters (R) zu verwenden.

2. System gemäß dem voranstehenden Patentanspruch 1, **dadurch gekennzeichnet, dass**:
2.1. die Empfangs- und Sendeeinrichtung des Mähroboters (R) eine einfache Antenne zur Funkkommunikation (E) aufweist, über welche die Signale aus einem Antennenarray (A) einer ortsfesten Basisstation (B) empfangen werden,
2.2. der Programmcode des Prozessorsystems derart ausgestaltet ist, dass:
- aus den Phasenbeziehungen der zwischen der Antenne zur Funkkommunikation (E) des Mähroboters (R) und dem Antennenarray (A) der Basisstation (B) ausgetauschten Funksignale die Richtung des Mähroboters (R) relativ zur Basisstation bestimmt wird,
- aus der Intensität der empfangenen Funksignale der Abstand zwischen Basisstation (B) und Mähroboter (R) bestimmt wird,
- so dass insgesamt die relative Position des Mähroboters (R) zur Basisstation (B) und dessen zwei- und/oder dreidimensionale Orientierung des Mähroboters (R) bekannt ist.

3. System gemäß dem voranstehenden Patentanspruch 1, **dadurch gekennzeichnet, dass**:
3.1. der Mähroboter (R) einen Richtungssensor zur Bestimmung der Orientierung, vorzugsweise einen Magnetfeldsensor (Fluxgatesensor), aufweist,
3.2. die Empfangs- und Sendeeinrichtung des Mähroboters (R) ein Antennenarray zur Funkkommunikation (A) aufweist, welches über Funksignale mit der Basisstation (B) kommuniziert,
3.3. die Basisstation (B) eine einfache Antenne zur Funkkommunikation (E) aufweist,
3.4. der Programmcode des Prozessorsystems derart ausgestaltet ist, dass:
- aus den Magnetfeldsensordaten die Orientierung des Mähroboters (R) zum vorherrschenden Magnetfeld bestimmt wird,
- aus den im Antennenarray (A) der Basisstation empfangenen Funksignalen und deren Phasenbeziehungen die Ausrichtung des Mähroboters (R) zur Basisstation (B) bestimmt wird,
- woraus insgesamt die Position und zwei- und/oder dreidimensionale Orientierung des Mähroboters (R) bestimmt wird.

4. System gemäß dem voranstehenden Patentanspruch 1, **dadurch gekennzeichnet, dass**:
4.1. der Mähroboter (R) zur Bestimmung seiner Orientierung relativ zu einer Basisstation (B) ein Antennenarray zur Funkkommunikation (A) aufweist,
4.2. dem Mähroboter (R) eine ortsfeste Basisstation zugeordnet ist, welche zur Bestimmung der Richtung des Mähroboters (R) relativ zur Basisstation (B) ein Antennenarray zur Funkkommunikation (A) aufweist,
4.3. der Programmcode des Prozessorsystems derart ausgestaltet ist, dass:
- aus den im Antennenarray (A) der Basisstation (B) empfangenen Funksignalen des Mähroboters (R) und deren Phasenbeziehungen die Richtung des Mähroboters (R) relativ zur Basisstation (B) bestimmt wird,
- aus den im Antennenarray (A) des Mähroboters (R) empfangenen Funksignalen der Basisstation (B) und deren Phasenbeziehungen die Orientierung des Mähroboters (R) bestimmt wird,
- und aus der Intensität der empfangenen Funksignale die Entfernung zwischen Basisstation (B) und Mähroboter (R) bestimmt wird,
- woraus die Position und zwei- und/oder dreidimensionale Orientierung des Mähroboters (R) bestimmt wird.

5. System gemäß einem der voranstehenden Patentansprüche 1 bis 4, **dadurch gekennzeichnet, dass** das Prozessorsystem zur Positions- und Lagebestimmung in der Basisstation (B) angeordnet ist, wobei die Funkverbindung zwischen Mähroboter (R) und Basisstation (B) dazu ausgebildet ist, die zur Positions- und Lagebestimmung notwendigen Informationen an die Basisstation zu übermitteln.

6. System gemäß einem der voranstehenden Patentansprüche 1 bis 5, **dadurch gekennzeichnet, dass**:
6.1. das Prozessorsystem zur Positions- und Lagebestimmung in der Cloud, vorzugsweise auf einem unter Kontrolle des Herstellers oder Vertreibers stehenden Rechner, angeordnet ist,
6.2. wobei die Funkverbindung zwischen Mähroboter (R) und Basisstation (B) dazu ausgebildet ist, die zur Positions- und Lagebestimmung notwendigen Informationen an die Basisstation zu übermitteln und die Basisstation dazu ausgebildet ist, die empfangenen Informationen zur Positions- und Lagebestimmung an die Cloud weiterzuleiten.

7. System gemäß einem der voranstehenden Patentansprüche 1 bis 6, **dadurch gekennzeichnet, dass** der Mähroboter (R) und das Prozessorsystem zur Positions- und Lagebestimmung außerhalb des Mähroboters (R) dazu ausgestattet sind, die ermittelten Positionen und Lagen des Mähroboters (R) über die Funkverbindung zwischen Basisstation (B) und Mähroboter (R) zum Mähroboter zu übermitteln.

8. System gemäß einem der voranstehenden Patentansprüche 1 bis 7, **dadurch gekennzeichnet, dass** ein mit dem Mähroboter (R) verbundenes Prozessorsystem dazu ausgebildet ist, auf der Basis einer zuvor ermittelten Karte automatisch ein optimiertes Fahrmuster für die zu bearbeitende Fläche zu erstellen und in einem Speicher, vorzugsweise im Mähroboter (R), abzulegen, welches dem Mähroboter (R) zur Verfügung steht, um es bei Bedarf abzuarbeiten.

9. System gemäß einem der voranstehenden Patentansprüche 1 bis 8, **dadurch gekennzeichnet, dass** ein mit dem Mähroboter (R) verbundenes Prozessorsystem dazu ausgebildet ist, auf der Basis einer zuvor ermittelten Karte der zu bearbeitenden Fläche Engstellen (z.B. Grenzen mit Abständen kleiner als Vorgabe zur nächsten Grenze) oder enge Durchgänge zu ermitteln und automatisch einen optimierten Weg zur Durchfahrt und Bearbeitung der Engstellen und Durchgänge zu bestimmen und dem Mähroboter zur Verfügung zu stellen.

10. System gemäß einem der voranstehenden Patentansprüche 1 bis 9, **dadurch gekennzeichnet, dass** ein mit dem Mähroboter (R) verbundenes Prozessorsystem dazu ausgebildet ist, ein vorgegebenes Muster oder eine Abbildung eines Logos in das Fahrmuster als Teilmuster zu integrieren.

11. System gemäß einem der voranstehenden Patentansprüche 1 bis 10, **dadurch gekennzeichnet, dass** die zwischen Prozessorsystem und Nutzer kommunizierte Karte zumindest weitere ortsbezogene Informationen zur zu bearbeitenden Fläche aus mindestens einer Art der folgenden Liste aufweist:
- geplanter Weg des Mähroboters (R);
- Hindernisse (H1, H2);
- Abdriftparameter;
- Schlupfparameter;
- Position, Größe und Orientierung eines zu fahrenden Musters / Logos;
- Wuchsgeschwindigkeit;
- Mähwiderstand;
- Düngelast;
- Bodenfeuchte;
- durchgeführte Mähungen;
- gefundene besondere Mähereignisse, insbesondere Leistungsspikes, Festfahren, Auftreten von Fehlerereignissen, wobei alle Daten der vorgenannten Liste optional auch mit Zeitstempel und Ablaufdauer oder Ablaufdatum versehen sind.

12. System gemäß einem der voranstehenden Patentansprüche 1 bis 11, **dadurch gekennzeichnet, dass** der Mähroboter (R) durch eine zusätzliche auf den Mähroboter (R) aufgesetzte oder an den Mähroboter angehängte fahrende Zusatzeinheit ergänzt wird, welche dazu ausgebildet ist, eine Nutzlast zu transportieren und von einem Prozessorsystem gesteuert ganz oder teilweise oder dosiert an vorgegebenen oder berechneten Positionen oder Flächen abzusetzen.

13. System gemäß dem voranstehenden Patentanspruch 12, **dadurch gekennzeichnet, dass** die zusätzliche Einheit eine Datenverbindung, vorzugsweise eine Bluetooth Datenverbindung oder eine NFC-Verbindung zum Mähroboter (R) aufweist, die dazu ausgebildet ist, die Zusatzeinheit in ihrer Funktion zu steuern.

14. System gemäß einem der voranstehenden Patentansprüche 12 bis 13, **dadurch gekennzeichnet, dass** die Zusatzeinheit mindestens eine elektrische Strom- und/oder Datenverbindung zum Mähroboter (R) aufweist.

15. System gemäß einem der voranstehenden Patentansprüche 12 bis 14, **dadurch gekennzeichnet, dass** ein Sensor vorgesehen ist, welcher eine Kopplung zwischen Mähroboter (R) und Zusatzeinheit detektiert und ein Statussignal an ein verbundenes Prozessorsystem weiterleitet.

16. System gemäß einem der voranstehenden Patentansprüche 12 bis 15, **dadurch gekennzeichnet, dass** als Nutzlast der Zusatzeinheit eine Art der folgenden Liste vorliegt:
- Düngemittel;
- Rasensamen;
- Wasser;
- Pflanzenschutzmittel;
- Markierungsmittel;
wobei die Zusatzeinheit eine der Last angepasste Ausbringungsvorrichtung aufweist.

17. System gemäß einem der voranstehenden Ansprüche **dadurch gekennzeichnet, dass**, die Basisstation (B) mit einer Verbindung zum Internet, insbesondere zu einer Internet-Cloud, insbesondere zu einer Cloud eines Herstellers oder Vertreibers.

18. System gemäß dem voranstehenden Patentanspruch 17, **dadurch gekennzeichnet, dass** Teil des Systems auch ein Datenendgerät oder eine Teilnehmerstation, insbesondere Smartphone, Tablet, Laptop, oder PC, eines Users ist, welches dazu ausgestattet ist, mit dem Mähroboter (R) über die Basisstation (B) zu kommunizieren, um Daten des Mähroboters (R) zu empfangen und umgekehrt zu diesem zu senden.

19. System gemäß dem voranstehenden Patentanspruch 18, **dadurch gekennzeichnet, dass** als Teil des Systems auch das Datenendgerät durch enthaltenen Programmcode dazu ausgebildet ist, eine von einem Prozessorsystem des Mährobotersystems (R, B) erzeugte Karte einer zu bearbeitenden Fläche anzuzeigen, gewünschte Fahrwege oder besondere Bereiche einzuzeichnen und diese an das Prozessorsystem des Mährobotersystems (R, B) zu übertragen.

20. Verfahren zum Betrieb eines Systems bestehend aus Mähroboter (R) und Basisstation (B), aufweisend die folgenden Verfahrensschritte:
20.1. Bestimmung der Orientierung des Mähroboters (R) aus Bewegungsdaten oder mit einem am Mähroboter (R) angeordneten Richtungssensor,
20.2. Bestimmung der Richtung des Mähroboters (R) relativ zu einer Basisstation (B) aus den in einem Antennenarray zur Funkkommunikation (A) des Mähroboters (R) empfangenen Funksignalen der Basisstation und deren Phasenbeziehungen,
20.3. Bestimmung des Abstandes zwischen Basisstation (B) und Mähroboter (R) aus der Intensität der empfangenen Funksignale,
20.4. Bestimmung der Position und der zwei- und/oder dreidimensionalen Orientierung des Mähroboters (R) aus der Orientierung, der Richtung und dem Abstand zur Basisstation (B),
20.5. und Verwendung der ermittelten Position und Orientierung des Mähroboters (R) zur Führung des Mähroboters (R).

## Claims

1. System consisting of a mowing robot (R) and a base station (B), the mowing robot (R) comprising:
1.1. at least one cutting mechanism,
1.2. a controllable running gear having a control apparatus,
1.3. at least one motor for driving the cutting mechanism and running gear,
1.4. a receiving and transmitting device for radio signals, to produce a radio connection between the mowing robot (R) and a stationary base station (B) associated with the mowing robot (R),
1.5. a means for determining the orientation of the mowing robot (R) for the purposes of two- or three-dimensional alignment,
1.6. the receiving and transmitting device of the mowing robot (R) has an antenna for radio communication (A, E),
1.7. wherein the base station (B) has an antenna for radio communication (A, E),
1.8. the mowing robot (R) and the base station (B) are connected to at least one processor system having program and data memory, including program code for processing mowing-robot-related data and signals,
1.9. at least one of the two antennas for radio communication of the base station (B) and the mowing robot (R) is in the form of an antenna array (A) for detecting phase differences in incoming radio signals of a determined frequency,
1.10. wherein the program code of a processor system is in a form such that:
- use of at least one antenna array (A),
- applying two determinations of direction
- and applying one determination of distance,
- identifies the position and orientation of the mowing robot (R) relative to a base station (B),
- at least one of the two determinations of direction results in the phase relationships of the exchanged radio signals between an antenna for radio communication (E, A) and an antenna array for detecting phase differences in incoming radio signals of a determined frequency (A) being evaluated,
- and the determination of distance results in the intensity of the received radio signals being evaluated,
- in order to use the known position and orientation of the mowing robot (R) to guide the mowing robot (R).

2. System according to preceding Claim 1, **characterized in that**:
2.1 the receiving and transmitting device of the mowing robot (R) has a single antenna for radio communication (E) that is used to receive the signals from an antenna array (A) of a stationary base station (B),
2.2. the program code of the processor system is in a form such that:
- the phase relationships of the radio signals exchanged between the antenna for radio communication (E) of the mowing robot (R) and the antenna array (A) of the base station (B) are used to determine the direction of the mowing robot (R) relative to the base station,
- the intensity of the received radio signals is used to determine the distance between the base station (B) and the mowing robot (R),
- and so the relative position of the mowing robot (R) in relation to the base station (B) and the two- and/or three-dimensional orientation of the mowing robot (R) is known overall.

3. System according to preceding Claim 1, **characterized in that**:
3.1. the mowing robot (R) has a direction sensor for determining the orientation, preferably a magnetic field sensor (fluxgate sensor),
3.2. the receiving and transmitting device of the mowing robot (R) has an antenna array for radio communication (A) that uses radio signals to communicate with the base station (B),
3.3. the base station (B) has a single antenna for radio communication (E),
3.4. the program code of the processor system is in a form such that:
- the magnetic field sensor data are used to determine the orientation of the mowing robot (R) in relation to the prevailing magnetic field,
- the radio signals received in the antenna array (A) of the base station and the phase relationships of said radio signals are used to determine the alignment of the mowing robot (R) in relation to the base station (B),
- this being used to determine the position and two- and/or three-dimensional orientation of the mowing robot (R) overall.

4. System according to preceding Claim 1,
**characterized in that**:
4.1. the mowing robot (R) has an antenna array for radio communication (A) to determine its orientation relative to a base station (B),
4.2. the mowing robot (R) has an associated stationary base station that has an antenna array for radio communication (A) to determine the direction of the mowing robot (R) relative to the base station (B),
4.3. the program code of the processor system is in a form such that:
- the radio signals of the mowing robot (R) that are received in the antenna array (A) of the base station (B) and the phase relationships of said radio signals are used to determine the direction of the mowing robot (R) relative to the base station (B),
- the radio signals of the base station (B) that are received in the antenna array (A) of the mowing robot (R) and the phase relationships of said radio signals are used to determine the orientation of the mowing robot (R),
- and the intensity of the received radio signals are used to determine the distance between the base station (B) and the mowing robot (R),
- this being used to determine the position and two- and/or three-dimensional orientation of the mowing robot (R).

5. System according to one of preceding Claims 1 to 4, **characterized in that** the processor system, for position and bearing determination, is arranged in the base station (B), the radio connection between the mowing robot (R) and the base station (B) being designed to relay the information needed for position and bearing determination to the base station.

6. System according to one of preceding Claims 1 to 5, **characterized in that**:
6.1. the processor system, for position and bearing determination, is arranged in the cloud, preferably on a computer that is under the control of the manufacturer or distributor,
6.2. wherein the radio connection between the mowing robot (R) and the base station (B) is designed to relay the information needed for position and bearing determination to the base station, and the base station is designed to forward the received information about position and bearing determination to the cloud.

7. System according to one of preceding Claims 1 to 6, **characterized in that** the mowing robot (R) and the processor system, for position and bearing determination outside the mowing robot (R), are equipped to relay the identified positions and bearings of the mowing robot (R) to the mowing robot via the radio connection between the base station (B) and the mowing robot (R).

8. System according to one of preceding Claims 1 to 7, **characterized in that** a processor system connected to the mowing robot (R) is designed to take a previously identified map as a basis for automatically generating an optimized running pattern for the area to be worked on and storing said running pattern in a memory, preferably in the mowing robot (R), which running pattern is available to the mowing robot (R) for execution as needed.

9. System according to one of preceding Claims 1 to 8, **characterized in that** a processor system connected to the mowing robot (R) is designed to take a previously identified map of the area to be worked on as a basis for identifying bottlenecks (e.g. boundaries at distances shorter than default from the next boundary) or narrow passageways and automatically determining an optimized route to pass through and work on the bottlenecks and passageways and providing said route for the mowing robot.

10. System according to one of preceding Claims 1 to 9, **characterized in that** a processor system connected to the mowing robot (R) is designed to integrate a predefined pattern or an image of a logo into the running pattern as a partial pattern.

11. System according to one of preceding Claims 1 to 10, **characterized in that** the map communicated between the processor system and the user has at least further location-related information about the area to be worked on from at least one type on the following list:
- planned route of the mowing robot (R);
- obstacles (H1, H2);
- drift parameters;
- slippage parameters;
- position, size and orientation of a pattern/logo to be used;
- growth rate;
- mowing resistance;
- fertilizer burden;
- soil moisture;
- mows performed;
- special mowing events encountered, in particular power spikes, getting stuck, occurrence of fault events,
all of the data on the aforementioned list optionally also being provided with a timestamp and a running time or an expiry date.

12. System according to one of preceding Claims 1 to 11, **characterized in that** the mowing robot (R) is complemented by an additional running supplementary unit that is mounted on the mowing robot (R) or hitched to the mowing robot and designed to transport a payload and, under the control of a processor system, to deposit all or some or metered quantities of said payload at or on predefined or calculated positions or areas.

13. System according to preceding Claim 12, **characterized in that** the additional unit has a data connection, preferably a Bluetooth data connection or an NFC connection, to the mowing robot (R) that is designed to control the function of the supplementary unit.

14. System according to either of preceding Claims 12 to 13, **characterized in that** the supplementary unit has at least one electric power and/or data connection to the mowing robot (R).

15. System according to one of preceding Claims 12 to 14, **characterized in that** there is provision for a sensor that detects a coupling between the mowing robot (R) and the supplementary unit and forwards a status signal to a connected processor system.

16. System according to one of preceding Claims 12 to 15, **characterized in that** the payload of the supplementary unit is of a type on the following list:
- fertilizer;
- lawn seed;
- water
- pesticide;
- marking agent;
the supplementary unit having an application apparatus customized for the load.

17. System according to one of the preceding claims, **characterized in that** the base station (B) with a connection to the Internet, in particular to an Internet cloud, in particular to a cloud of a manufacturer or distributor.

18. System according to preceding Claim 17, **characterized in that** part of the system is also a data terminal or a subscriber station, in particular a smartphone, a tablet, a laptop or a PC, of a user that is equipped to communicate with the mowing robot (R) via the base station (B) in order to receive data of the mowing robot (R) and conversely transmit data to said mowing robot.

19. System according to preceding Claim 18, **characterized in that** the data terminal, as part of the system, is also designed, by way of included program code, to display a map of an area to be worked on that is generated by a processor system of the mowing robot system (R, B), to mark in desired running routes or special regions and to transmit said desired running routes or special regions to the processor system of the mowing robot system (R, B).

20. Method for operating a system consisting of the mowing robot (R) and the base station (B), comprising the following method steps:
20.1. determining the orientation of the mowing robot (R) from motion data or by using a direction sensor arranged on the mowing robot (R),
20.2. determining the direction of the mowing robot (R) relative to a base station (B) from the radio signals of the base station that are received in an antenna array for radio communication (A) of the mowing robot (R) and the phase relationships of said radio signals,
20.3. determining the distance between the base station (B) and the mowing robot (R) from the intensity of the received radio signals,
20.4. determining the position and the two- and/or three-dimensional orientation of the mowing robot (R) from the orientation, the direction and the distance from the base station (B),
20.5. and using the identified position and orientation of the mowing robot (R) to guide the mowing robot (R).

## Revendications

1. Système composé d'un robot de tonte (R) et d'une station de base (B), le robot de tonte (R) possédant :
1.1. au moins un mécanisme de coupe,
1.2. un châssis commandable avec un dispositif de commande,
1.3. au moins un moteur destiné à entraîner le mécanisme de coupe et le châssis,
1.4. un dispositif de réception et d'émission de signaux radio, destiné à établir une liaison radio entre le robot de tonte (R) et une station de base fixe (B) associée au robot de tonte (R),
1.5. un moyen destiné à déterminer l'orientation du robot de tonte (R) dans le sens d'un alignement bidimensionnel ou tridimensionnel,
1.6. le dispositif de réception et d'émission du robot de tonte (R) possède une antenne pour la communication radio (A, E),
1.7. la station de base (B) possédant une antenne pour la communication radio (A, E),
1.8. le robot de tonte (R) et la station de base (B) étant connectés à au moins un système à processeur doté d'une mémoire de programme et de données, y compris le code de programme, pour le traitement des données et des signaux relatifs au robot de tonte,
1.9. au moins l'une des deux antennes destinées à la communication radio entre la station de base (B) et le robot de tonte (R) étant réalisée sous la forme d'un réseau d'antennes (A) destiné à détecter les différences de phase des signaux radio entrants d'une fréquence déterminée,
1.10. le code de programme d'un système à processeur étant conçu de telle sorte que :
- avec utilisation d'au moins un réseau d'antennes (A),
- en utilisant deux déterminations de direction
- et en utilisant une détermination de distance
- la position et l'orientation du robot de tonte (R) par rapport à une station de base (B) sont identifiées,
- lors d'au moins l'une des deux déterminations de direction, les relations de phase des signaux radio échangés entre une antenne destinée à la communication radio (E, A) et un réseau d'antennes destiné à la détection des différences de phase des signaux radio entrants d'une fréquence déterminée (A) sont évaluées,
- et lors de la détermination de distance, l'intensité des signaux radio reçus est évaluée,
- pour utiliser la position et l'orientation connues du robot de tonte (R) afin de guider le robot de tonte (R).

2. Système selon la revendication 1 précédente, **caractérisé en ce que** :
2.1. le dispositif de réception et d'émission du robot de tonte (R) possède une antenne simple pour la communication radio (E), par le biais de laquelle sont reçus les signaux provenant d'un réseau d'antennes (A) d'une station de base fixe (B),
2.2. le code de programme du système à processeur est conçu de telle sorte que :
- la direction du robot de tonte (R) par rapport à la station de base est déterminée à partir des relations de phase des signaux radio échangés entre l'antenne de communication radio (E) du robot de tonte (R) et le réseau d'antennes (A) de la station de base (B),
- la distance entre la station de base (B) et le robot de tonte (R) est déterminée à partir de l'intensité des signaux radio reçus,
- de sorte que la position relative du robot de tonte (R) par rapport à la station de base (B) et son orientation bidimensionnelle et/ou tridimensionnelle du robot de tonte (R) soient globalement connues.

3. Système selon la revendication 1 précédente, **caractérisé en ce que** :
3.1. le robot de tonte (R) possède un capteur de direction destiné à déterminer l'orientation, de préférence un capteur de champ magnétique (sonde magnétométrique),
3.2. le dispositif de réception et d'émission du robot de tonte (R) possède un réseau d'antennes pour la communication radio (A), lequel communique avec la station de base (B) par des signaux radio,
3.3. la station de base (B) possède une antenne simple pour la communication radio (E),
3.4. le code de programme du système à processeur est conçu de telle sorte que :
- l'orientation du robot de tonte (R) par rapport au champ magnétique dominant est déterminée à partir des données du capteur de champ magnétique,
- l'alignement du robot de tonte (R) par rapport à la station de base (B) est déterminé à partir des signaux radio reçus dans le réseau d'antennes (A) de la station de base et de leurs relations de phase,
- à partir de quoi sont globalement déterminées la position et l'orientation bidimensionnelle et/ou tridimensionnelle du robot de tonte (R).

4. Système selon la revendication 1 précédente, **caractérisé en ce que** :
4.1. le robot de tonte(R) possède, en vue de déterminer son orientation par rapport à une station de base (B), un réseau d'antennes servant à la communication radio (A),
4.2. une station de base fixe est associée au robot de tonte (R), laquelle possède un réseau d'antennes servant à la communication radio (A) afin de déterminer la direction du robot de tonte (R) par rapport à la station de base (B),
4.3. le code de programme du système à processeur est conçu de telle sorte que :
- la direction du robot de tonte (R) par rapport à la station de base (B) est déterminée à partir des signaux radio du robot de tonte (R) reçus dans le réseau d'antennes (A) de la station de base (B) et de leurs relations de phase,
- l'orientation du robot de tonte (R) est déterminée à partir des signaux radio de la station de base (B) reçus dans le réseau d'antennes (A) du robot de tonte (R) et de leurs relations de phase,
- et la distance entre la station de base (B) et le robot de tonte (R) est déterminée à partir de l'intensité des signaux radio reçus,
- à partir de quoi sont déterminées la position et l'orientation bidimensionnelle et/ou tridimensionnelle du robot de tonte (R).

5. Système selon l'une des revendications 1 à 4 précédentes, **caractérisé en ce que** le système à processeur destiné à déterminer la position et l'emplacement est disposé dans la station de base (B), la liaison radio entre le robot de tonte (R) et la station de base (B) étant configurée pour communiquer à la station de base les informations nécessaires à la détermination de la position et de l'emplacement.

6. Système selon l'une des revendications 1 à 5 précédentes, **caractérisé en ce que** :
6.1. le système à processeur destiné à déterminer la position et l'emplacement est disposé dans le cloud, de préférence sur un ordinateur qui est sous le contrôle du fabricant ou du distributeur,
6.2. la liaison radio entre le robot de tonte (R) et la station de base (B) étant configurée pour communiquer à la station de base les informations nécessaires à la détermination de la position et de l'emplacement, et la station de base étant configurée pour retransmettre au cloud les informations reçues pour la détermination de la position et de l'emplacement.

7. Système selon l'une des revendications 1 à 6 précédentes, **caractérisé en ce que** le robot de tonte (R) et le système à processeur destiné à la détermination de la position et de l'emplacement à l'extérieur du robot de tonte (R) sont équipés pour communiquer les positions et emplacements déterminés du robot de tonte (R) au robot de tonte par le biais de la liaison radio entre la station de base (B) et le robot de tonte (R).

8. Système selon l'une des revendications 1 à 7 précédentes, **caractérisé en ce qu'**un système à processeur connecté au robot de tonte (R) est configuré pour créer automatiquement, sur la base d'une carte préalablement identifiée, un motif de déplacement optimisé pour la surface à traiter et pour l'enregistrer dans une mémoire, de préférence dans le robot de tonte (R), laquelle est à la disposition du robot de tonte (R) afin qu'il puisse l'exécuter si nécessaire.

9. Système selon l'une des revendications 1 à 8 précédentes, **caractérisé en ce qu'**un système à processeur connecté au robot de tonte (R) est configuré pour identifier, sur la base d'une carte préalablement établie de la surface à traiter, les goulots d'étranglement (par exemple les limites avec des écarts inférieurs à la valeur prédéfinie par rapport à la limite suivante) ou les passages étroits, et pour déterminer automatiquement un itinéraire optimisé pour le passage et le traitement des goulots d'étranglement et des passages, et pour le mettre à la disposition du robot de tonte.

10. Système selon l'une des revendications 1 à 9 précédentes, **caractérisé en ce qu'**un système à processeur connecté au robot de tonte (R) est configuré pour intégrer un motif prédéfini ou une reproduction d'un logo dans le motif de déplacement sous forme de motif partiel.

11. Système selon l'une des revendications 1 à 10 précédentes, **caractérisé en ce que** la carte communiquée entre le système à processeur et l'utilisateur possède au moins des informations relatives à l'emplacement supplémentaires à propos de la zone à traiter, issues d'au moins un élément de la liste suivante :
- itinéraire prévu pour le robot de tonte (R) ;
- obstacles (H1, H2) ;
- paramètres de dérive ;
- paramètres de glissement ;
- position, taille et orientation d'un motif / logo à parcourir ;
- vitesse de croissance ;
- résistance à la tonte ;
- charge en engrais ;
- humidité du sol ;
- tontes réalisées ;
- événements de tonte particuliers constatés, notamment pics de puissance, blocages, survenance d'événements d'erreur,
toutes les données de la liste susmentionnée étant également accompagnées, en option, d'un horodatage et d'une durée ou d'une date d'expiration.

12. Système selon l'une des revendications 1 à 11 précédentes, caractérisé en que le robot de tonte (R) est complété par une unité supplémentaire mobile, placée en plus sur le robot de tonte (R) ou attelée au robot de tonte, laquelle est configurée pour transporter une charge utile et la déposer, en étant commandée par un système à processeur, en totalité ou en partie, ou de manière dosée, à des positions ou sur des surfaces prédéfinies ou calculées.

13. Système selon la revendication 12 précédente, **caractérisé en ce que** l'unité supplémentaire possède une connexion de données, de préférence une connexion de données Bluetooth ou une connexion NFC au robot de tonte (R), qui est configurée pour commander le fonctionnement de l'unité supplémentaire.

14. Système selon l'une des revendications 12 à 13 précédentes, **caractérisé en ce que** l'unité supplémentaire possède au moins une connexion électrique et/ou une connexion de données au robot de tonte (R).

15. Système selon l'une des revendications 12 à 14 précédentes, **caractérisé en ce qu'**un capteur est présent, lequel détecte un couplage entre le robot de tonte (R) et l'unité supplémentaire et retransmet un signal d'état à un système à processeur connecté.

16. Système selon l'une des revendications 12 à 15 précédentes, **caractérisé en ce que** la charge utile de l'unité supplémentaire est d'un type de la liste suivante :
- engrais ;
- semences de gazon ;
- eau ;
- produit phytosanitaire ;
- produit de marquage ;
l'unité supplémentaire possédant un dispositif d'épandage adapté à la charge.

17. Système selon l'une des revendications précédentes, **caractérisé en ce que** la station de base (B) avec une connexion à l'Internet, notamment à un cloud Internet, en particulier à un cloud d'un fabricant ou d'un distributeur.

18. Système selon la revendication 17 précédente, **caractérisé en ce qu'**une partie du système est également un terminal de données ou une station d'abonné, en particulier un smartphone, une tablette, un ordinateur portable ou un PC, d'un utilisateur, lequel est équipé pour communiquer avec le robot de tonte (R) par le biais de la station de base (B) afin de recevoir des données du robot de tonte (R) et, à l'inverse, de les envoyer à celui-ci.

19. Système selon la revendication 18 précédente, **caractérisé en ce qu'**en tant que partie du système, le terminal de données est également configuré, grâce au code de programme qu'il contient, pour afficher une carte d'une surface à traiter générée par un système à processeur du système de robot de tonte (R, B), tracer les trajectoires souhaitées ou les zones particulières et transmettre celles-ci au système à processeur du système de robot de tonte (R, B).

20. Procédé pour faire fonctionner un système composé d'un robot de tonte (R) et d'une station de base (B), comprenant les étapes suivantes
20.1. détermination de l'orientation du robot de tonte (R) à partir de données de mouvement ou avec un capteur de direction disposé sur le robot de tonte (R),
20.2. détermination de la direction du robot de tonte (R) par rapport à une station de base (B) à partir des signaux radio reçus dans un réseau d'antennes pour la communication radio (A) du robot de tonte (R) de la station de base et de leurs relations de phase,
20.3. détermination de la distance entre la station de base (B) et le robot de tonte (R) à partir de l'intensité des signaux radio reçus,
20.4. détermination de la position et de l'orientation bidimensionnelle et/ou tridimensionnelle du robot de tonte (R) à partir de l'orientation, de la direction et de la distance par rapport à la station de base (B),
20.5. et utilisation de la position et de l'orientation déterminées du robot de tonte (R) pour guider le robot de tonte (R).
